# EUROPEAN PATENT SPECIFICATION

(11) **EP 1 021 493 B1**
(45) Date of publication and mention of the grant of the patent: **08.10.2003**
(21) Application number: 99922421.5
(22) Date of filing: 07.06.1999
(51) Int. Cl.: C09J 7/02, B65D 85/10, B65D 71/00

(54) **SERRATED ADHESIVE TAPE**
GEZAHNTES KLEBEBAND
BANDE ADHESIVE CRANTEE

(30) Priority: 12.06.1998 NL 1009383
(43) Date of publication of application: 26.07.2000
(73) Proprietor: Supertape B.V., 4879 AP Etten-Leur (NL)
(72) Inventor: BRANDWIJK, Piet, NL-4873 DA Etten-Leur (NL)
(74) Representative: Spierenburg, Pieter
(86) International application number: IB9901045
(87) International publication number: WO99064531

(56) References cited:
- EP-A- 0 785 244
- WO-A-92/03264
- DE-A- 2 556 152
- US-A- 4 928 817

## Description

The invention relates to an adhesive tape according to the general clause of claim 1 and to a method for applying the adhesive tape to form a package according to the general clause of claim 5.

In order to form a package or a bundle of objects in most cases wrapping material will be used which will be fixed by an adhesive tape. For putting together a bundle of objects like boxes or packages a wrapping of transparent material like shrink wrap foil can be used. On the other hand the packets of cigarettes can also be arranged in a carton of ten. This has the disadvantage that the carton has to be printed and that the carton needs more space for transportation. Also beverage packets, paper handkerchiefs, film boxes and the like can be arranged to a bundle by shrink wrapping. In many cases the removal of the wrapping material is giving difficulties such that the boxes or the like cannot be separated individually in an easy manner out of the package. Moreover, the loose wrapping material must be thrown away separately.

it is an object of the present invention to overcome the difficulties of the state of the art. It is a further object of the invention to apply an adhesive tape to form a package or bundle of objects in an easier manner.

This object of the invention is accomplished by an adhesive tape as defined in Claim 1 respectively by the method as defined in Claim 5.

In order to provide the adhesive tape with serrated borders the tape can be severed very easy widthways and because of the perforation line the tape can be severed in lengthwise direction. The perforation line has to be provided at least approximately along the dividing line between the endfaces of the objects.

Further advantages of the invention are disclosed in the dependent claims and in the following description in which an exemplified embodiment of the invention is described with respect to the accompanying drawings. It shows
- Fig. 1: a perspective view of a strip of an adhesive tape,
- Fig. 2: a perspective view of an array of boxes fixed by the adhesive tape to a package or bundle of objects,
- Fig. 3: a perspective view of the boxes of the package of Fig. 2 during the tearing off of the adhesive tape,
- Fig. 4: another embodiment of the adhesive tape,
- Fig. 5: further possiblities of serrated borders of the adhesive tape,
- Fig. 6: a perspective view of an array of boxes fixed by the adhesive tape widthways,
- Fig. 7: a top view on the array of boxes along arrow A in Fig.6, and
- Fig. 8: a perspective view of an array of boxes fixed with an adhesive tape and tax stamps partly pressed thereon.

Specific numbers dedicated to elements defined with respect to a particular figure will be used consistently in all figures if not mentioned otherwise.

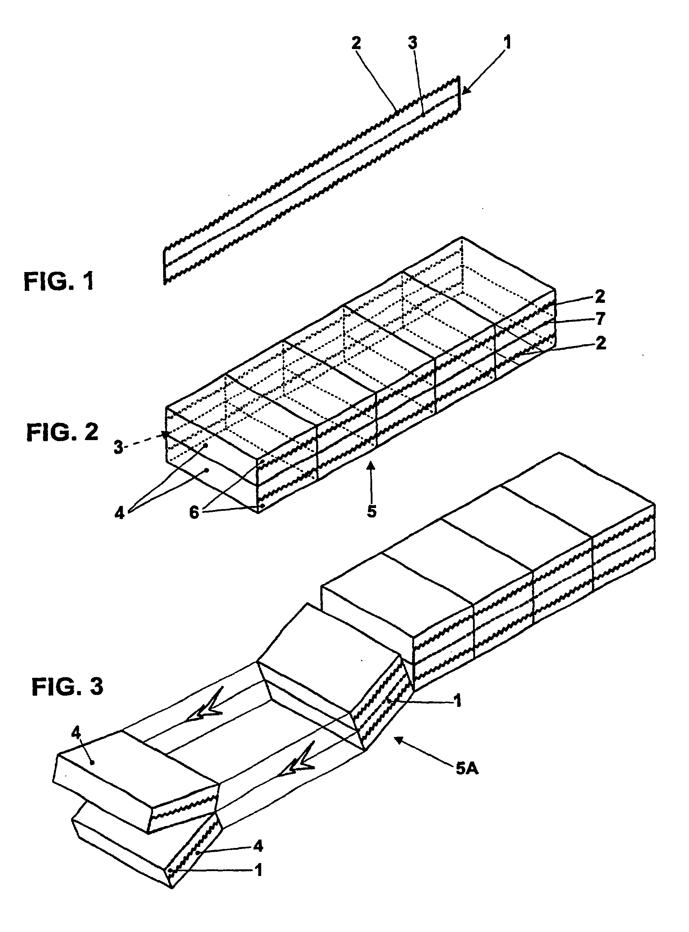

Figure 1 shows a strip of adhesive tape 1 with serrated borders 2 and with a perforation line 3 in lengthwise direction of the tape. The serration of the borders 2 will have such a form that widthways severing of the tape will be initiated by applying a predetermined force.

Figure 2 shows an array of boxes or packets 4 which are combined to a bundle 5 by using two strips of adhesive tape 1 which have been fixed to the endfaces 6 of a predetermined amount of boxes or packets 4 being arranged in two rows on top of each other. The width of the adhesive tape 1 is smaller as the width of two endfaces of the boxes together such that the serrated borders 2 of the adhesive tape 1 are fully arranged on the endfaces 6 of the boxes 4. The perforation line 3 of the adhesive tape will be arranged over the dividing line 7 between the two endfaces 6 of the boxes 4.

Figure 3 shows how two boxes or packets 4 can be separated from the bundle 5 by breaking away using the serrated borders of the adhesive tape 1, i.e. widthways. In this way a combination 5A of two packets 4 will be obtained which can be can be separated thereinafter by a breaking movement in order to split the strips of adhesive tape 1 along the perforation lines 3.

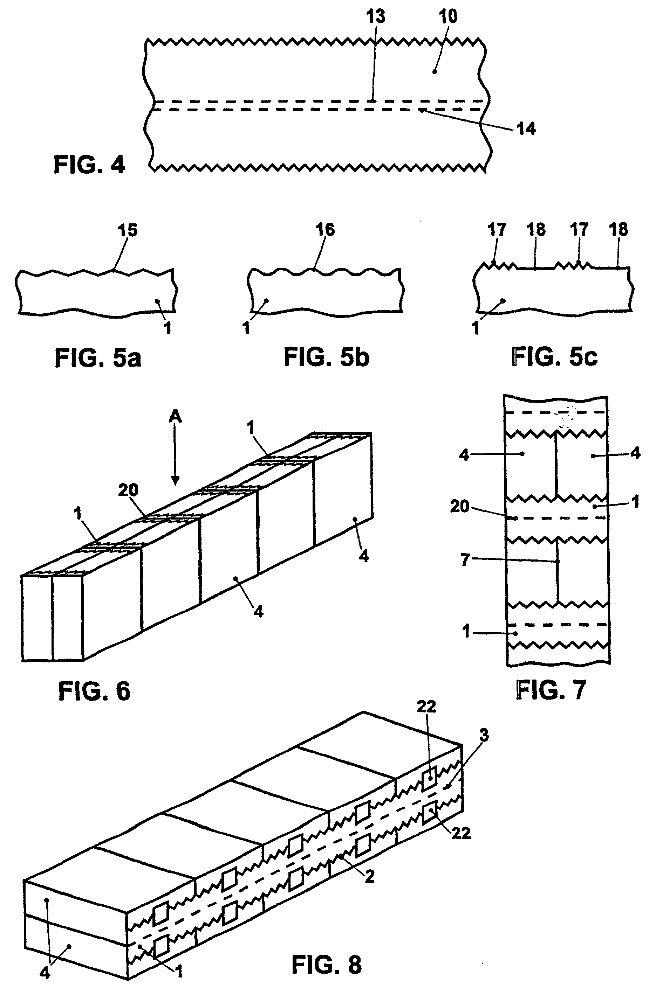

In figure 4 a variant of the adhesive tape 10 is shown in that instead of only one perforation line 13 another perforation line 14 is added. As can be seen the perforation of line 14 is staggered in relation to the perforation of line 13. The distance between both parallel arranged perforation lines 13 and 14 will be approximately 1 mm. Normally the applying of the adhesive tape 1 to the array of boxes or packets 4 will be performed in a machine production. It depends on the accuracy of the machine if the perforation line 3 will be placed exactly on the dividing line between the endfaces of the boxes 4. If the accepted tolerance of mismatch between perforation line 3 and dividing line 7 will be +/- 0.5 mm the tolerance of mismatch with adhesive tape 10 will be +/- 1.0 mm. In addition, because of the staggered arrangement of the perforations and one of the perforation lines 13 and 14 is placed almost exactly on the dividing line 7 severing of the adhesive tape 10 will occur only along this perforation line. Thus breaking off of the individual boxes 4 as shown in figure 3 will give a neater border line of the broken adhesive tape 10.

In figure 5 different forms of serrated border lines of the adhesive tape 1 are depicted. In figure 5a the sawtooth of the serrated border 15 having a more flat angle in order to influence the tear behaviour of the adhesive tape. Another form of the serrated border 16 is shown in figure 5b which has a wavelike form. Furthermore the serrated border 17 can also be interrupted by flat passages 18 as can be seen in figure 5c.

In figure 6 an array of two rows of boxes or packets 4 is depicted where the adhesive tape 1 is provided widthways onto the diving lines 20 between the boxes 4. Figure 7 is a front view of figure 6 in direction of arrow A, which show the arrangement of the strips of adhesive tape 1 in further detail. An advantage of this kind of application is that less adhesive tape is necessary. Further the machine for applying the adhesive tape 1 to the array of boxes 4 can be more simple and will run more quietly since the moving parts of the machine describe much shorter paths as by application of the tape in lengthwise direction. Per cycle the product have to be shifted only over e.g. 4.5 cm instead of normally 28 cm. A further advantage is that the amount of tape to be used for the production of arrays of boxes 4 will be reduced considerably. Moreover, small strips of adhesive tape having the correct length can be used instead of a spool as will be used for lengthwise application. A machine for applying the adhesive tape 1 to the boxes or packets 4 is described in more details in PCT patent application No. PCT/IB 99/00287 from 18.02.1999 which content herewith will be included by reference.

In figure 8 an array of boxes 4 is shown having an adhesive tape 1 over the endfaces 6 and the perforation line 3 more or less exactly over the dividing line 7. Further tax stamps 22 are placed partly on the adhesive tape 1 and partly on the endfaces 6 of the boxes 4. After separation a strip of adhesive tape 1 together with the tax stamp 22 will be on each individual box or packet 4. If the user will try to tear off the strip of tape the tax stamp 22 will be broken so that further use of the tax stamps 22 is prevented.

Instead of cigarette boxes 4 other objects like handkerchiefs or the like can be used for forming a package. It will be clear to the skilled artisan that only specific embodiments of the invention are shown here which may be varied without departing its scope.

### List of reference numbers

- 1: adhesive tape
- 2: serrated border
- 3: perforation line
- 4: box, packet
- 5: bundle
- 6: endface
- 7: dividing line
- 10: adhesive tape
- 13: perforation line
- 14: perforation line
- 15: serrated border
- 16: serrated border
- 17: serrated border
- 18: flat passage
- 20: dividing line
- 22: tax stamp
- A: arrow

## Claims

1. Adhesive tape especially for forming a package or a bundle of objects, **characterized in that** the adhesive tape (1) having serrated borders (2) to facilitate widthways severing of the adhesive tape and at least one perforation line (3) extending in lengthwise direction of the adhesive tape to facilitate lengthwise severing, wherein the perforation line may be arranged over a dividing line between endfaces of adjacent objects for use in forming a package of bundle of objects.

2. Adhesive tape according to claim 1, **characterized in that** two parallel perforation lines are provided at a short distance of approximately 1 mm to each other.

3. Adhesive tape according to claim 1 or 2, **characterized in that** the serrated borders having a sawtooth shape.

4. Adhesive tape according to claim 1 or 2, **characterized in that** the serrated borders having a wavelike shape.

5. Method for applying adhesive tape according one of the claims 1 to 4 to form a package or a bundle of objects, **characterized in that** at least two rows of parallelepipedon shaped objects (4) are placed next to each other and at endfaces (6) thereof a strip of adhesive tape (1) will be provided such that the perforation line of the adhesive tape will be situated approximately at the dividing line between the two endfaces of the adjacent objects.

6. Method according to claim 5, **characterized in that** the strip of adhesive tape will be adhered to the objects in lengthwise direction.

7. Method according to claim 5, **characterized in that** a plurality of strips of adhesive tape will be adhered to the objects in transverse direction.

8. Method according to one of the claims 5 to 7, **characterized in that** the objects are cigarette boxes and after adhering of the strip or strips of adhesive tape tax stamps will be pressed partly on the adhesive tape and partly on the cigarette boxes.

## Patentansprüche

1. Klebeband, insbesondere zur Bildung eines Pakets oder eines Bündels von Gegenständen, **dadurch gekennzeichnet, daß** das Klebeband (1) gezahnte Ränder (2) aufweist, um die Durchtrennung des Klebebands der Breite nach zu erleichtern, sowie wenigstens eine Perforationslinie (3), die sich in Längsrichtung des Klebebands erstreckt, um die Durchtrennung der Länge nach zu erleichtern, wobei die Perforationslinie über einer Trennlinie zwischen Stirnflächen von benachbarten Gegenständen zur Bildung eines Pakets oder Bündels von Gegenständen angeordnet werden kann.

2. Klebeband nach Anspruch 1, **dadurch gekennzeichnet, daß** zwei parallele Perforationslinien in einem kurzen gegenseitigen Abstand von etwa 1 mm vorgesehen sind.

3. Klebeband nach Anspruch 1 oder 2, **dadurch gekennzeichnet, daß** die gezahnten Ränder eine Sägezahnform aufweisen.

4. Klebeband nach Anspruch 1 oder 2, **dadurch gekennzeichnet, daß** die gezahnten Ränder eine wellenartige Form aufweisen.

5. Verfahren zur Anbringung von Klebeband nach einem der Ansprüche 1 bis 4, um ein Paket oder ein Bündel von Gegenständen zu bilden, **dadurch gekennzeichnet, daß** wenigstens zwei Reihen von quaderförmigen Gegenständen (4) nebeneinander angeordnet werden und an ihren Stirnflächen (6) ein Streifen Klebeband (1) so vorgesehen wird, daß sich die Perforationslinie des Klebebands etwa an der Trennlinie zwischen den zwei Stirnflächen der benachbarten Gegenstände befindet.

6. Verfahren nach Anspruch 5, **dadurch gekennzeichnet, daß** der Streifen Klebeband in Längsrichtung an die Gegenstände angeklebt wird.

7. Verfahren nach Anspruch 5, **dadurch gekennzeichnet, daß** eine Mehrzahl von Klebebandstreifen in Querrichtung an die Gegenstände angeklebt wird.

8. Verfahren nach einem der Ansprüche 5 bis 7, **dadurch gekennzeichnet, daß** die Gegenstände Zigarettenschachteln sind und nach dem Ankleben des Streifens oder der Streifen Klebeband Steuermarken teilweise auf dem Klebeband und teilweise auf den Zigarettenschachteln angebracht werden.

## Revendications

1. Bande adhésive destinée tout particulièrement à l'élaboration d'un colis ou d'un paquet d'objets, **caractérisée en ce que** la bande adhésive (1) a des bords dentelés (2) pour faciliter son découpage dans le sens de la largeur, et **en ce qu'** au moins une ligne de perforation (3) s'étend sur toute la longueur de la bande adhésive et sert à faciliter son découpage dans le sens de la longueur. Bande adhésive dans laquelle la ligne de perforation peut disposer sur une ligne de séparation entre deux faces d'objets adjacents utilisés pour former un colis ou un paquet d'objets.

2. Bande adhésive, selon la revendication 1, **caractérisée en ce que** deux lignes de perforation sont parallèles à environ 1 mm l'une de l'autre.

3. Bande adhésive, selon les revendications 1 et 2, dans laquelle les bords dentelés sont dessinés en dents de scie.

4. Bande adhésive, selon les revendications 1 et 2, dans laquelle les bords dentelés ont une coupe en forme de vagues.

5. Procédé pour appliquer la bande adhésive selon les revendications 1 à 4, destiné à former des colis ou des paquets d'objets. Ce procédé est **caractérisé en ce qu'**au moins deux rangées d'objets de forme parallélépipédiques (4) sont disposés côte à côte. Sur les faces frontales (6) de ces objets sera posé un ruban de bande adhésive (1) de manière à ce que la ligne de perforation de la bande adhésive soit située approximativement sur la ligne de séparation entre les faces des objets adjacents.

6. Procédé selon la revendication 5 **caractérisé en ce que** le ruban de bande adhésive sera posé sur les objets dans le sens de la longueur.

7. Procédé selon la revendication 5 **caractérisé en ce que** plusieurs rubans de bande adhésive sont posés dans le sens transversal.

8. Procédé selon l'une des revendications 5 à 7, **caractérisé en ce que** les objets sont des paquets de cigarettes, et **en ce qu'**après la pose du ou des ruban(s) de bande adhésive, des timbres fiscaux seront posés en partie sur la bande adhésive et en partie sur les paquets de cigarettes.
